# EUROPÄISCHE PATENTANMELDUNG

(11) **EP 2 000 882 A1**
(43) Veröffentlichungstag der Anmeldung: **10.12.2008**
(21) Anmeldenummer: 08009343.8
(22) Anmeldetag: 21.05.2008
(51) Int. Cl.: G06F 1/32

(54) **Anordnung zum Überwachen einer Umgebungsbedingung und Verfahren zum automatischen Einstellen einer Anzeigeeinheit**

(30) Priorität: 04.06.2007 DE 102007025991
(71) Anmelder: Fujitsu Siemens Computers GmbH, 80807 München (DE)
(72) Erfinder: Blaimberger, Frank, 86399 Bobingen (DE)
(74) Vertreter: Epping - Hermann - Fischer

(57) **Zusammenfassung**

Die Erfindung betrifft eine Anordnung (10) zum Überwachung einer Umgebungsbedingung, aufweisend eine Anzeigeeinheit (2) zum Anzeigen von BildschirminhalLen, eine Kamera (4) zum Erfassen von Bildinformationen in einem Benutzerbereich (5) der Anzeigeeinheit (2) und eine Steuervorrichtung (11), die mit Anzeigeeinheit (2) und der Kamera (4) funktionsfähig gekoppelt ist. Dabei ist die Steuervorrichtung (11) dazu eingerichtet, in vorbestimmten zeitlichen Abständen Helligkeitsdaten (I) durch die Kamera (4) zu erfassen, eine Differenzanalyse zwischen den erfassten Helligkeitsdaten (I) durchzuführen und basierend auf der Differenzanalyse wenigstens einen Betriebspatameter (13) der Anzeigeeinheit (2) einzustellen.

Die Erfindung betrifft außerdem Verfahren (40, 50) zur Verwendung mit derartigen Anordnungen (10).

## Beschreibung

Anordnung zum Überwachen einer Umgebungsbedingung und Verfahren zum automatischen Einstellen einer Anzeigeeinheit

Die Erfindung betrifft eine Anordnung zum Überwachen einer Umgebungsbedingung, ein Verfahren zum automatischen Einstellen einer Bildhelligkeit einer Anzeigeeinheit eines Bildschirmarbeitsplatzes sowie zum automatischen Aktivieren eines Energiesparzustandes einer Anzeigeeinheit eines Bildschirmarbeitsplatzes und die Verwendung eines Computers mit einer daran angeschlossenen Anzeigeeinheit und einer daran angeschlossen Webkamera.

Verfahren und Vorrichtungen zum Ansteuern von Anzeigeeinhei-Len sind vielfach bekannt. Gängige Anzeigeeinheiten erlauben unter anderem die manuelle Einstellung vom Helligkeit, Kontrast oder FarbLemperatur zur Anpassung ihrer Anzeige an die Bedürfnisse eines Benutzers. Darüber hinaus ist es insbesondere bei Anzeigeeinheiten von Computern bekannt, einen Energiesparzustand der Anzeigeeinheit, beispielsweise durch Dunkelschalten der Anzeige, zu aktivieren, wenn der Computer nicht genutzt wird.

Insbesondere bei längerem Arbeiten an Bildschirmarbcitsplätzen muss eine Anzeigeeinrichtung an die jeweils herrschenden Lichtverhältnisse angepasst werden. Beispielweise erfordert eine Anzeigeeinheit, auf die Sonnenlicht durch ein Fenster fällt, andere Einstellungen als eine Anzeigeeinheit, deren Arbeitsbereich durch eine Deckenbeleuchtung erhellt wird. Dabei müssen insbesondere im gewerblichen Umfeld ergonomische Standards eingehalten werden, um die Gesundheit von Arbeitnehmern nicht zu gefährden.

Aus der DE 102 03 157 A1 ist ein LCD-Monitor mit Lichtdetektionsfunktion und ein Verfahren zum Steuern des LCD-Monitors bekannt. Der LCD-Monitor weist einen Fotosensor auf, um eine Helligkeit des Umgebungslichtes zu detektieren. Darüber hinaus kann der LCD-Monitor automatisch ausgeschaltet werden, um Energie zu sparen, wenn der Fotosensor detektiert, dass keine Lichtquelle vorhanden ist und sich der Computer für eine lange Zeit im Lehrlauf befindet.

Nachteilig an Lösungen mit einem zusätzlichen Fotosensor sind jedoch die damit verbunden Kosten. Zudem besteht die Gefahr eines unnötigen Nachregelns, beispielsweise wenn der Fotosensor kurzfristig durch Handlungen eins Benutzers beschattet oder beleuchtet wird.

Aufgabe der vorliegenden Erfindung ist es daher, Anordnungen und Verfahren zu beschreiben, die eine einfache, kostengünstige und sichere Ansteuerung einer Anzeigeeinheit gestalten.

Die zugrunde liegende Aufgabe wird durch eine Anordnung zum Überwachung einer Umgebungsbedingung gelöst, die eine Anzeigeeinheit zum Anzeigen von Bildschirminhaltcn, eine Kamera zum Erfassen von Bildinformation in einem Benutzerbereich der Anzeigeeinheit und eine Steuervorrichtung umfasst, die mit der Anzeigevorrichtung und der Kamera funktionsfähig gekoppelt ist, wobei die Steuervorrichtung dazu eingerichtet ist, in vorbestimmten zeitlichen Abständen Helligkeitsdaten umfassend Daten zu Umgebungslichtbedingungen durch die Kamera zu erfassen, eine Differenzanalyse zwischen den erfassten Helligkeitsdaten durchzuführen, um eine Änderung der Umgebungslichtbedingungen zu erkennen, und basierend auf der Diffcrenzanalyse wenigstens eine Helligkeit oder einen Kontrast der Anzeigeeinheit einzustellen.

Durch Verwendung einer Kamera und einer Steuervorrichtung, die mit der Kamera funktionsfähig gekoppelt ist, können Helligkeitsdaten ohne Verwendung eines zusätzlichen Sensors erfasst und analysiert werden, sodass eine Einstellung von Helligkeit oder Kontrast einer Anzeigeeinheit auch ohne zusätzlichen Fotosensor ermöglicht wird.

Gemäß einer vorteilhaften Ausgestaltung wird die Helligkeit oder der Kontrast der Anzeigeeinheit in Abhängigkeit der Änderung der Umgebungslichtbedingungen eingestellt. Das Erfassen und die Analyse von Änderungen in Umgebungslichtbedingungen erlaubt eine automatische Einstellung von Helligkeit und/oder Kontrast einer Anzeigeeinheit.

Gemäß einer weiteren vorteilhaften Ausgestaltung umfassen die Helligkeitsdaten eine räumliche Helligkeitsverteilung des Benutzerbereichs und durch die Differenzanalyse wird ein aktiver Benutzer innerhalb des Benutzerbereiches erkannt. In Abhängigkeit davon, ob ein aktiver Benutzer erkannt wurde, wird die Anzeigeeinheit entweder in einen Betriebszustand oder einen Energiesparzustand geschaltet. Durch Erfassen und Analysieren von räumlichen Helligkeitsverteilungen wird das Erkennen von aktiven Benutzern innerhalb eines Benutzerbereiches möglich, so dass ein Energiesparzustand der Anzeigeeinheit automatisch aktiviert oder deaktiviert werden kann.

Die zugrunde liegende Aufgabe wird ebenso durch ein Verfahren zum automatischen Einstellen einer Bildhelligkeit einer Anzeigeeinheit eines Bildschirmarbeitsplatzes mit den folgenden Schritten gelöst:
- Erfassen von Referenzhelligkeitsdaten für einen Benutzerbereich des Bildschirmarbeitsplatzes durch eine Kamera,
- Erfassen von aktuellen Helligkeitsdaten für den Benutzerbereich des Bildschirmarbeitsplatzes durch die Kamera,
- Vergleichen der aktuellen und Referenzhelligkeitsdaten durch eine Steuervorrichtung,
- Bestimmen von Umgebungslichtbedingungen basierend auf dem Vergleich und
- Einstellen der Bildhelligkeit der Anzeigeeinheit basierend auf den bestimmten Umgebungslichtbedingungen.

Durch die oben genannten Schritte werden Umgebungslichtbedingungen eines Bildschirmarbeitsplatzes unter Verwendung einer Kamera bestimmt, so dass ein automatisches Einstellen der Bildhelligkeit der Anzeigeeinheit ermöglicht wird.

Gemäß einer weiteren, vorteilhaften AusgesLaltung umfasst das Verfahren zusätzlich die Schritte:
- Erkennen, basierend auf dem Vergleich der Helligkeitsdaten, ob ein Benutzer in dem Benutzerbereich aktiv ist, und
- Aktivieren eines Energiesparzustandes der Anzeigeeinheit, wenn kein aktiver Benutzer erkannt wurde.

Durch die oben genannten Schritte kann unter Verwendung einer Kamera sicher erkannt werden, ob sich ein Benutzer in dem Benutzerbereich des Bildschirmarbeitsplatzes befindet. Sofern sich kein Benutzer in dem Benutzerbereich des Bildschirmarbeitsplatzes befindet, kann ein Energiesparzustand der Anzeigeeinheit aktiviert werden, um deren Energieaufnahme zu reduzieren.

Weitere vorteilhafte Ausgestaltungen der Erfindung sind in den Unteransprüchen angegeben.

Unterschiedliche Ausgestaltungen der Erfindung werden nachfolgend an Ausführungsbeispielen anhand der Zeichnungen näher erläutert. In den Zeichnungen zeigen:
- Figur 1: ein Bildschirmarbeitsplatz aufweisend eine Anzeigeeinheit, eine Kamera und eine Steuervorrichtung,
- Figur 2: eine schematische Darstellung einer Anordnung mit einer Anzeigeeinheit, einer Kamera und einem Computer,
- Figur 3: eine beispielhafte Helligkeitsverteilung,
- Figur 4: ein Ablaufdiagramm eines Verfahrens zum automatischen Einstellen einer Bildhelligkeit einer Anzeigeeinheit und
- Figur 5: ein Ablaufdiagramm eines Verfahren zum automatischen Aktivieren eines Energiesparzustandes einer Anzeigeeinheit.

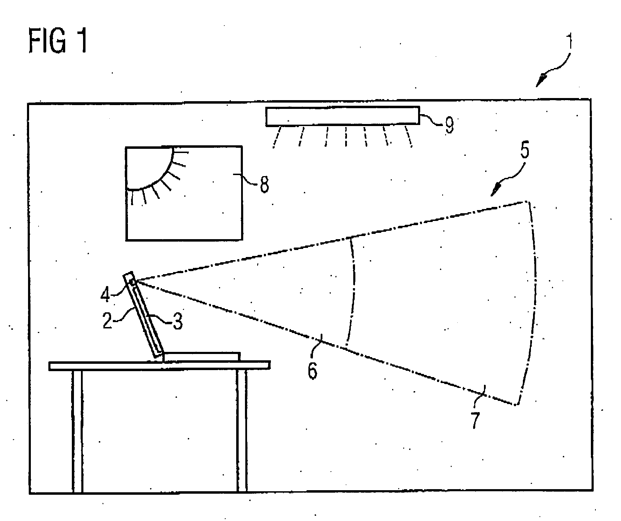

Figur 1 zeigt einen Bildschirmarbeitsplatz 1 mit einer Anzeigeeinheit 2. Bei der Anzeigecinheit 2 handelt es sich im Ausführungsbeispiel um einen tragbaren Computer, dessen Bildschirmanzeige 3 durch einen Benutzer zu bearbeitende Daten anzeigt. Oberhalb der Bildschirmanzeige 3 ist eine Kamera 4, im Ausführungsbeispiel eine eingebaute CCD-Kamera, in die Anzeigeeinheit 2 integriert.

Die Kamera 4 ist dazu eingerichtet, einen Benutzerbereich 5 des Bildschirmarbeitaplatzes 1 zu überwachen. Im Ausführmgsbeispiel ist der Benutzerbereich 5 in einen Nahbereich 6 und einen Fernbereich 7 unterteilt. Bei den meisten Tätigkeiten, die ein Benutzer des Bildschirmarbeitsplatzes 1 ausführt, beispielsweise bei dem Eingeben oder Überarbeiten von Texten, befindet sich der Benutzer 2 in dem Nahbereich 6. Jedoch ist es auch möglich, dass sich ein Benutzer der Anzeigeeinheit 2 in dem Fernbereich 7 aufhält, beispielsweise beim Halten eines Vortrags.

Der Bildschirmarbeitsplatz 1 wird durch unterschiedliche Lichtquellen beleuchtet. Im Ausführungsbeispiel scheint durch ein Fenster 8 TageslichL in den Benutzerbereich 5. Die Intensität, die Farbtemperatur und die Einstrahlrichtung des einfallendcn Lichtes hängen dabei beispielsweise von dem Stand der Sonne und dem Wetter ab. Zusätzlich wird der Eildschirmarbeitsplatz 1 über eine Deckenbeleuchtung 9 von oben in der Regel konstant beleuchtet. Es ist jedoch auch möglich, dass die Deckenbeleuchtung 9 entweder völlig ausgeschaltet wird oder, beispielsweise über einem Dimmer, geregelt wird. Zusätzlich können weitere Beleuchtungselemente an dem Bildschirmarbeitsplatz 1 vorhanden sein. Beispielsweise ist es möglich, eine Schreibtischlampe oder weitere Lichtquellen in dem Raum zu installieren.

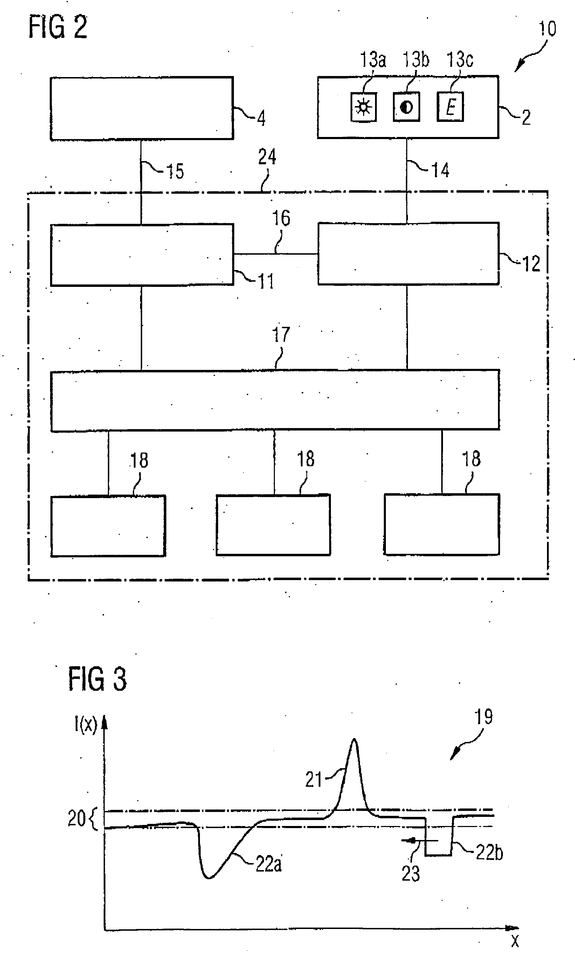

Figur 2 zeigt eine schematische Anordnung 10 umfassend eine Kamera 4, eine Steuervorrichtung 11, einen Grafik-Controller 12 und eine Anzeigeeinheit 2. Im Ausführungsbeispiel sind die Steuervorrichtung 11 und der Grafik-Controller 12 interne Komponenten eines Computers 24, während es sich bei der Kamera 1 und der Anzeigeeinheit 2 um daran angeschlossene, externen Komponenten handelt.

Die Anzeigeeinheit 2 umfasst Betriebsparameter 13a, 13b und 13c zur Einstellung der Helligkeit, des Kontrasts und eines Energiesparzustandes der Anzeigeeinheit 2. Im Ausführungsbeispiel sind die Betriebsparameter 13a, 13b und 13c in der Anzeigeeinheit 2 gespeichert. Alternativ ist jedoch auch eine Speicherung in dem Grafik-Controller 12 möglich.

Zum Austausch von Steuerinformationen und Anzeigedaten sind der Grafik-Controller 12 und die Anzeigeeinheit 2 über eine Verbindung 14 miteinander verbunden. Bei der Verbindung 14 kann es sich beispielsweise um ein Kabel zum Austausch von Grafik und Steuerdaten zwischen einem Computer und einem daran angeschlossenen LCD-Monitor handeln. Beispielsweise eignet sich ein Kabel nach dem so genannten DDC (Display Data Chanel) Standard zur Übertragung von Betriebsparametern von einem Grafik-Controller 12 an eine Anzeigeeinheit 2. Aber auch andere Verbindungen, beispielsweise über eine drahtlose WLAN Schnittstelle nach einem Standard der IEEE 802.11 Familie, oder getrennte Kabel zur Übermittlung von Anzeige- und Steuerdaten sind zur Kopplung der Anzeigeeinheit 2 und des Grafik-Controllers 12 möglich.

Die Steuervorrichtung 11 ist über weitere verbindungen 15 und 16 mit der Kamera 4 beziehungsweise dem Grafik-Controller 12 verbunden. Beispielsweise kann es sich bei der Steuervorrichtung 11 um einen Prozessor des Computers 24 handeln, der über eine USB-Verbindung 15 mit einer so genannten Webkamera verbunden ist. Des Weiteren ist der Prozessor des Computers 24 über eine weitere Bus-Verbindung mit einer Grafikkarte verbunden, die als Grafik-Controller 12 dient. In alternativen Ausgestaltungen können die Kamera 4, die SLeuervorrichtung 11, der Grafik-Controller 12 und die Anzeigeeinheit 2 auch als ganz oder teilweise integrierte Komponenten ausgeführt sein.

Ein Betriebssystem 17, das auf dem Computer 24 abläuft, kann sowohl auf die Steuervorrichtung 11 als auch auf den Grafik-Controller 12 zugreifen. Auf diesem Wege ist es möglich, Daten von Anwendungsprogrammen 18 auf der Anzeigeeinheit 2 darzustellen. Darüber hinaus können die Anwendungsprogramme 18 oder das Betriebssystem 17 selbst auch Einstellungen der Steuervorrichtung 11 und des Grafik-Controllers 12 vornehmen.

Gemäß einer Ausgestaltung der Erfindung isL die Steuervorrichtung 11 dazu eingerichtet, über die Verbindung 15 Helligkeitsdaten von der Kamera 4 in regelmäßigen zeitlichen Abständen abzufragen. Ausgehend von den abgefragten Helligkeitsdaten bestimmt die Steuervorrichtung 11 eine Umgebungsbedingung des Bildschirmarbeitsplatzes 1.

Insbesondere bestimmt sie die durch verschiedene Lichtquellen verursachte Umgebungslichtsituation für einen Benutzer der Anordnung 10. Ausgehend von der bestimmten Umgebungslichtsi-Luation steuert die Steuervorrichtung 11 den Grafik-Controller 12 derart an, dass geeignete Betriebsparameter 13a, 13b und 13c entsprechend der festgestellten Umgebungslichtbedingungen für die Anzeigeeinheit 2 gewählt werden. Beispielsweise kann die Steuervorrichtung 11 einen Befehl an den Grafik-Controller 12 übermitteln, der in einer Erhöhung oder Erniedrigung der Helligkeit oder des Kontrasts der Anzeigeeinheit 2 resultiert.

Aus Gründen des Datenschutzes und zur Verringerung der anfallenden Daten ist es wünschenswert, nicht eine komplette Aufnahme der Kamera 4 des Benutzerbereiches 5 auszuwerten. Stattdessen kann die Steuervorrichtung 11 gemäß einer Ausgestaltung der Erfindung auf Helligkeitsdaten einzelner Bildbereiche, wie etwa einer Submatrix der Kamera 4, einer Zeile oder einer Spalte, zugreifen und die Daten direkt in der Kamera 4 oder einem Zwischenspeicher auswerten.

Figur 3 zeigt eine beispielhafte Helligkeitsverteilung 19, bei der Helligkeitsdaten I über einem Ort x aufgetragen sind. Beispielsweise kann es sich um die Helligkeitsverteilung 19 einer einzelnen Zeile der Kamera 4 handeln.

Wie der Figur 19 zu entnehmen ist, liegen die Helligkeitsdaten I überwiegend in einem mittleren Bereich 20. Darüber hinaus sind eine Intensitätsspitze 21 und zwei Schattenbereiche 22a und 22b in der Helligkeitsverteilung 19 zu erkennen. Beispielsweise kann es sich bei der Intensitätsspitze 21 um einen Bereich mit direkter Sonneneinstrahlung handeln, während die Schattenbereiche 22a und 22b durch Gegenstände im BenuLzerbereich 5 verursacht werden. Zusätzlich ist eine Abnahme der Intensitätswerte der Helligkeitsdaten I von rechts nach links zu erkennen, was beispielsweise durch einseitige Sonnenbestrahlung verursacht werden könnte.

Durch geeignete Auswertemethoden, beispielsweise eine Mittelung oder Filterung von außergewöhnlichem Helligkeitswerten, kann der mittlere Bereich 20, der der Umgebungslichtsituation in dem Benutzerbereich 5 entspricht, durch die Steuervorrichtung 11 bestimmt werden. Da im beschriebenen Ausführungsbeispiel lediglich eine oder wenige Zeilen einer CCD-Kamera 4 zur Auswertung der Umgebungslichtbedingungen herangezogen wurden, ist eine Identifizierung eines vor dem Computer arbeitenden Benutzers dagegen nicht ohne weiteres möglich. Dessen Anonymität bleibt also gewahrt. Darüber hinaus bleibt der Umfang der über die Verbindung 15 zu übertragenden Daten beschränkt, so dass auch deren nachfolgende Verarbeitung vereinfacht wird.

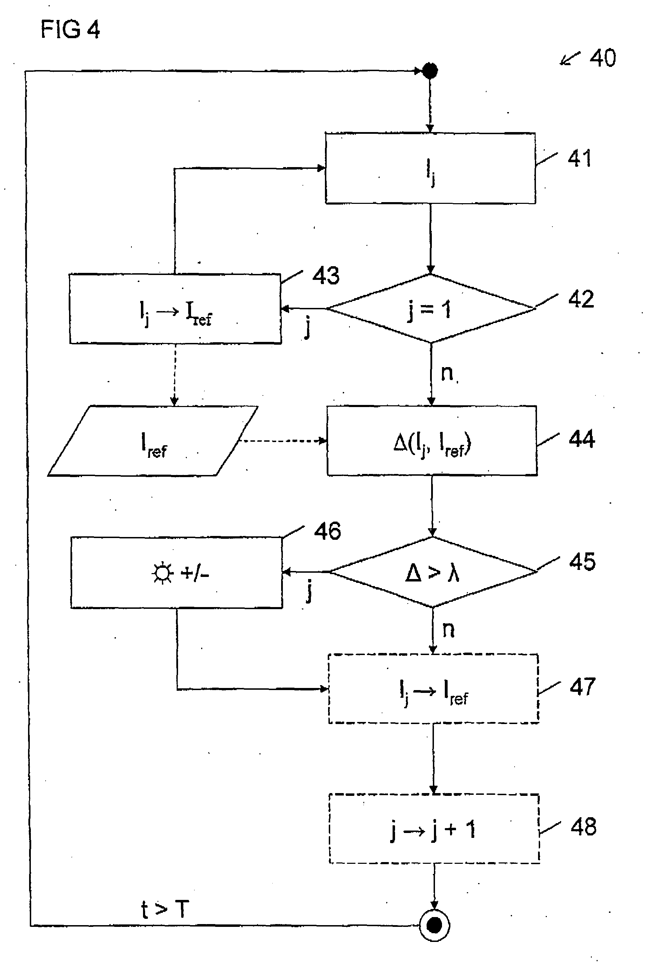

Figur 4 zeigt ein Ablaufdiagramm eines Verfahrens 40 zum automatischen Einstellen eines Betriebsparameters 13, beispielsweise der Bildhelligkeit oder des Kontrasts, einer Anzeigeeinheit 2.

In einem ersten Schritt 41 werden Helligkeitsdaten Iⱼ durch eine Kamera 4 erfasst. Beispielsweise kann eine CCD-Matrix einer Kamera 4 teilweise oder komplett durch zugehörige Treiberelektronik und/oder Software ausgelesen werden. Die ermittelten Helligkeitsdaten Iⱼ werden dann durch die Kamera 4 selbst oder eine der Kamera 4 zugeordneten Steuervorrichtung 11 verarbeitet.

In einem nachfolgenden Schritt 42 wird überprüft, ob es sich um die ersten erfassten Helligkeitsdaten I₁ handelt oder ob bereits Referenzhelligkeitswerte Iᵣₑₜ vorliegen. Liegen noch keine Helligkeitswerte Iᵣₑₜ vor, werden die ersten Helligkeitswerte I₁ in einem Schritt 43 als Referenzdaten Iᵣₑₜ gespeichert. Anschließend wird das Verfahren 40 im Schritt 41 fortgesetzt.

Wird im Schritt 42 hingegen festgestellt, dass bereits Referenzdaten vorliegen, wird das Verfahren 40 im Schritt 44 fortgesetzt. Im Schritt 44 werden die aktuell erfassten Helligkeitswerte Iⱼ mit den gespeicherten Referenzhelligkeitswerten I_{ref} verglichen. Durch den Vergleich der Helligkeitswerte kann eine Umgebungslichtbedingung bestimmt werden. Beispielsweise kann bestimmt werden, ob in dem Benutzerbereich 5 durch intensiven Sonneneinfall verursachte Intensitätsspitzen 21 und Schattenbereiche 22 entstehen oder ob eine gleichmäßige Beleuchtung durch eine Deckenbeleuchtung 9 vorliegt.

In einem weiteren Schritt 45 werden die erkannten Umgebungslichtbedingungen mit einem oder mehreren vorbestimmten Grenzwerten A verglichen. Liegen die Umgebungslichtbedingungen außerhalb von Grenzwerten λ für aktuell eingestellte Betriebsparameter 13a, 13b oder 13c, werden in einem Schritt 46 die Betriebsparameter 13, insbesondere Helligkeit oder Kontrast, geändert, um die Anzeigeeinheit 2 an die herrschenden Umgebungslichtbedingungen anzupassen. Sind die eingestellten Betriebsparameter 13a, 13b und 13c für eine aktuelle Umgebungslichtsituation geeignet, erfolgt keine Änderung der Betriebsparameter 13 und das Verfahren wird im Schritt 47 fortgesetzt.

In dem optionalen Verfahrensschritt 47 werden die Referenzhelligkeitsdaten I_{ref} durch die aktuellen Helligkeitsdaten Iⱼ ersetzt. Im ebenfalls optionalen Schritt 48 werden eventuell zwischengespeicherte Bilddaten oder Helligkeitsdaten Iⱼ gelöscht. Dies dient insbesondere dem Datenschutz und verhinderL eine Anhäufung nicht benötigter Bilddaten. Anstelle der Vertauschung von aktuellen und Referenzhelligkeitsdaten I_{ref} im Schritt 48 kann auch mit festen Referenzdaten I_{ref} gearbeitet werden, um eine absolute Abweichung von einer bekannten Umgebungslichtbedingung zu ermitteln.

Nach einer vorbestimmten Zeitspanne T beginnt das Verfahren im Schritt 41 erneut mit der Erfassung neuer Helligkeitsdaten Iⱼ.

In unterschiedlichen Ausgestaltungen des Verfahrens 40 können ein oder mehrere Betriebsparameter 13 zusammen oder getrennt eingestellt werden. Beispielsweise ist es möglich, zunächst einen Helligkeitsparameter 13a eines Anzeigeelementes 2 an die herrschenden Umgebungslichtbedingungen anzupassen, und in einem nachfolgenden SchriLL abhängig von den Umgebungslichtbedingungen und der eingestellten Bildhelligkeit auch einen Kontrastparameter 13b der Anzeigeeinheit 2 anzupassen.

Beispielsweise empfiehlt es sich, bei direkter Sonneneinstrahlung die Anzeigehelligkeit und den Anzeigekontrast der Anzeigeeinheit 2 zu erhöhen. Bei Vorliegen einer gleichmäßigen Deckenbeleuchtung 9 sollte der Anzeigekontrast der Anzeigeeinheit 2 hingegen heruntergeregelt werden, um ein entspanntes Arbeiten an dem Bildschirmarbeitsplatz 1 zu ermöglichen. In weitgehender Dunkelheit, das heißt ohne direkte Lichteinstrahlung auf den Bildschirmarbeitsplatz 1, kann sowohl die Anzeigehelligkeit als auch der Anzeigekontrast der Anzeigeeinheit 2 vermindert werden.

In weiteren Ausgestaltungen des Verfahrens 40 hängen der oder die gewählten Betriebsparameter 13 auch von Einstellungen oder Betriebsarten des Betriebssystems 17 oder einer Anwendung 18 ab. Beispielsweise kann während einer Präsentation die Bildhelligkeit erhöht, der Bildkontrast jedoch erniedrigt werden, um ein Ablesen von Bildinhalten aus dem Fernbereich 7 zu ermöglichen. Umgekehrt kann bei der Verwendung eines Textverarbeitungsprogramms die Bildhelligkeit herunter geregelt werden, während der Bildkontrast erhöht wird.

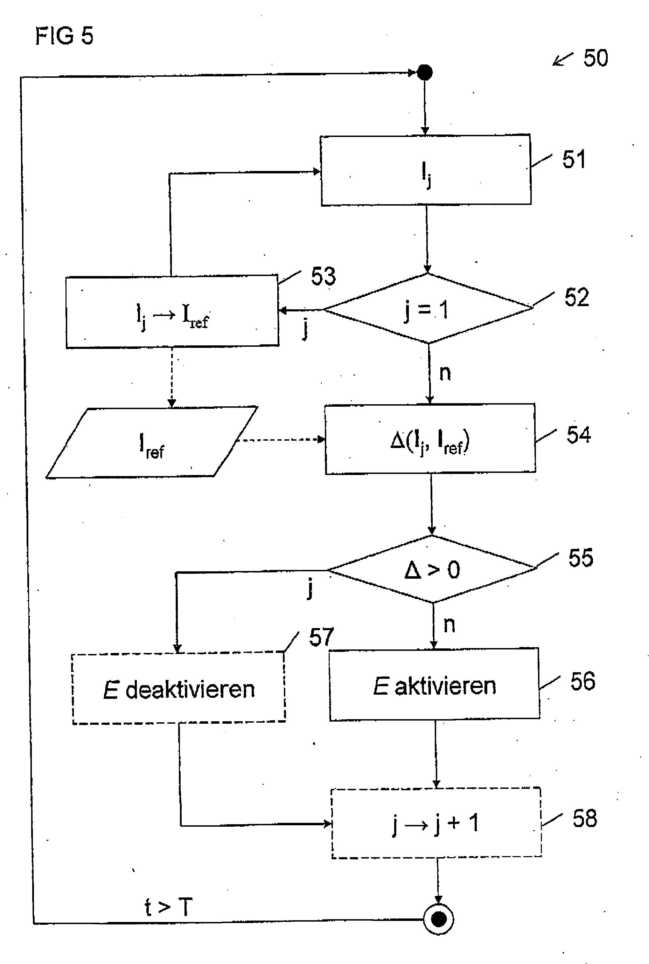

Figur 5 zeigt ein weiteres Verfahren 50 zum automatischen Aktivieren eines Energiesparzustandes einer Anzeigeeinheit 2.

Die Schritte 51, 52 und 53 entsprechen dabei weitestgehend den Schritten 41, 42 und 43 des Verfahrens 40. Alternativ können die Schritte 42 und 43 auch entfallen oder nur einmal bei der Kalibrierung der Anordnung 10 vorgenommen werden, um ein statisches Vergleichsbild, eine Helligkeitsverteilung 19 oder typische Kontrastverhältnisse zu hinterlegen.

Im Schritt 54 werden die durch die Kamera 4 ermittelten Helligkeitswerte jedoch in anderer Weise analysiert. Insbesondere wird im Schritt 54 eine Präsenz eines Benutzers und/oder eine Bewegung in dem durch die Kamera 4 beobachteten Benutzerbereich 5 festgestellt.

Beispielsweise kann durch Vergleich mit einem hinterlegten Referenzbild erkannt werden, ob ein zusätzliches objekt im Benutzerbereich 5 der Kamera 4 präsent isL. Dies kann alternativ oder zusätzlich auch durch Erkennung zusätzlicher Schattenbereiche 22 in einer Helligkeitsverteilung 19 erkannt werden. In der in Figur 3 dargestellten Helligkeitsversteilung 19 wandert der Schattenbereich 22b zusätzlich von rechts nach links, was dort durch den Pfeil 23 angedeutet ist. Diescr bewegte Schattenbereich 22b entspricht einem durch einen Benutzer verursachten Schattenbereich, der durch Bewegung seines Kopfes oder seines Armes unterschiedliche Bereiche des Benutzerbereichs 5 abschattet. Er dient im Ausfuhrungsbeispiel zur Erkennung sowohl einer Präsenz als auch einer Bewegung des Benutzers durch die Steuervorrichtung 11.

In einer weiteren Ausgestaltung können durch Erkennung unterschiedlicher Bewegungsmuster, beispielsweise einer gleichförmigen Bewegung eines Ventilators einerseits und einer einmaligen, abrupten Bewegung eines Benutzer andererseits, störende Hintergrundeffekte aus der Erkennung herausgefiltert werden.

Dabei kann zur weiteren Analyse der Bewegung eine Unterscheidung zwischen dem Nahbereich 6 und dem Fernbereich 7 vorgenommen werden. Hierzu ist es beispielsweise möglich, von der Kamera 4 gelieferte Fokuseinstellungen, Kontrastverläute oder sonstige Informationen der Kamera 4 auszuwerten. Die Steuervorrichtung 11 kann Schwellwerte verwenden, um zwei oder mehr unterschiedlich entfernte Bereiche voneinander zu trennen. Entfernt sich der Benutzer aus dem Nahbereich 6, beispielsweise weil er eine Arbeitspause einlegt, wird im Schritt 55 kein aktiver Benutzer auf Grundlage der vorangegangenen Differenzanalyse festgestellt und im Schritt 56 wird eine Energiesparfunktion *E* aktiviert, welche die Bildschirmanzeige 3 dunkel schaltet.

Durch die Dunkel- oder Abschaltung der Bildschirmanzeige 3 der Anzeigeeinheit 2 wird zum einen Energie gespart. Zum anderen wird auch ein unberechtigtes Einsehen angezeigter Inhalte der Bildschirmanzeige 3 durch unberechtigte Personen vermieden. Dabei führt das Vorbeigehen einer Person im Fernbereich 7 des Benutzerbereiches 5 nicht zu einer Aktivierung der Anzeigeeinheit 2. Erst wenn der Benutzer in den Nahbereich 6 des Bildschirmarbeitsplatzes 1 zurückkehrt, erkennt die Steuervorrichtung 11 in einer weiteren Ausgestaltung eine Bewegung im Nahbereich 6 und deaktiviert die Energiesparfunktion *E* der Anzeigeeinheit 2 im optionalen Schritt 57.

Nachfolgend können im optionalen Schritt 58, wie für die Schritte 47 und 48 oben beschrieben, erneut Referenzdaten I_{ref} und aktuelle Daten Iⱼ miteinander vertauscht beziehungsweise gelöscht werden, bevor das Verfahren 50, gegebenenfalls verzögert, erneut beginnt.

In einer weiteren vorteilhaften Ausgestaltung der Erfindung werden durch die Kamera 4 ein oder mehrere biometrische Merkmale eines Benutzers analysiert, bevor die Anzeigeeinheit. 2 aus dem Energiesparzustand zurück in einen Betriebszustand versetzt wird. Beispielsweise kann der Augenabstand, eine Kopfform, eine Silhouette oder eine charakteristische Bewegung des Benutzers durch die Analyse ein oder mehrerer Bilder der Kamera 4 ermittelt werden.

Durch Kombinationen unterschiedlicher Merkmale der Erfindung können mehrere Vorteile auf einmal erzielt werden. Beispielsweise kann eine Steuervorrichtung 11, die von einer Kamera 4 erhaltene Helligkeitsdaten I in den oben beschriebenen Arten analysiert, gleichzeitig für eine automatische Anpassung der Anzeigeeinheit 2 an die herrschenden Umgebungslichtbedingungen sorgen, eine Energiesparfunktion E und/oder eine Zugangsschutzfunktion für einen Computer bereitstellen.

Darüber hinaus hilft die Nutzung von einer in einem Computer eingebauten Kamera 4 beziehungsweise einer daran angeschlossene Web-Kamera einen zusätzlichen Sensor in der Anordnung 10 zu vermeiden. Beispielsweise kann ein tragbarer Computer mit einer eingebauten Kamera 4 verwendet werden, wobei durch Aufspielen einer geeigneten Software in den tragbaren Computer eine Steuervorrichtung 11 bereitgestellt wird, die die Ausführung eines Verfahrens 40 oder 50 gemäß einer der oben genannten Ausgestaltungen ermöglicht.

### Bezugszeichenliste

- 1: Bildschirmarbeitsplatz
- 2: Anzeigeeinheit
- 3: Bildschirmanzeige
- 4: Kamera
- 5: Benutzerbereich
- 6: Nahbereich
- 7: Fernbereich
- 8: Fenster
- 9: Deckenbeleuchtung
- 10: Anordnung
- 11: Steuervorrichtung
- 12: Grafik-ConLroller
- 13: Betriebsparameter
- 14: Verbindung
- 15: Verbindung
- 16: Verbindung
- 17: Betriebssystem
- 18: Anwendungsprogramm
- 19: Helligkeitsverteilung
- 20: Bereich
- 21: Intensitätsspitze
- 22: Schattenbereich
- 23: Pfeil
- 24: Computer

- 40: Verfahren zum automatischen Einstellen eines BetriebSparameters
- 41 bis 48: Verfahrensschritte

- 50: Verfahren zum automatischen Aktivieren eines Energiesparzustands
- 51 bis 58: Verfahrensschritte

- *E*: Energiesparfunktion
- I, Iⱼ: HelligkeitsdaLen
- I_{ref}: Referenzhelligkeitsdaten
- x: Ort
- λ: Grenzwert

## Patentansprüche

1. Anordnung (10) zum Überwachen einer Umgebungsbedingung, aufweisend
- eine Anzeigeeinheit (2) zum Anzeigen von Bildschirminhalten,
- eine Kamera (4) zum Erfassen von Bildintormationen in einem Benutzerbereich (5) der Anzeigeeinheit (2) und
- eine Steuervorrichtung (11), die mit der Anzeigeeinheit (2) und der Kamera (4) funktionsfähig gekoppelt ist, wobei die Steuervorrichtung (11) dazu eingerichtet ist, in vorbestimmten zeitlichen Abständen Helligkeitsdaten (I) umfassend Daten zu Umgebungslichtbedingungen durch die Kamera (4) zu erfassen, eine Differenzanalyse zwischen den erfassten flelligkeitsdaten (I) durchzuführen, um eine Änderung der Umgebungslichtbedingungen zu erkennen, und basierend auf der Differenzanalyse wenigstens eine Helligkeit oder einen Kontrast der Anzeigeeinheit (2) einzustellen.

2. Anordnung (10) gemäß Anspruch 1, **dadurch gekennzeichnet, dass** die Helligkeit oder der Kontrast der Anzeigeeinheit (2) in Abhängigkeit der Änderung der Umgebungslichtbedingungen eingestellt wird.

3. Anordnung (10) gemäß Anspruch 1 oder 2,
**dadurch gekennzeichnet, dass**
die Helligkeitsdaten (I) eine räumliche Helligkeitsverteilung (19) des Benutzerbereiches (5) umfassen, durch die Differenzanalyse ein aktiver Benutzer innerhalb des Benutzerbereichs (5) erkannt wird und in Abhängigkeit, ob eine Benutzer erkannt wurde, die Anzeigeeinheit (2) entweder in einen Betriebszustand oder einen Energiesparzustand geschallet wird.

4. Verfahren zum automatischen Einstellen einer Bildhelligkeit einer Anzeigeeinheit (2) eines Bildschirmarbeitsplatzes (1) mit den Schritten:
- Erfassen von Referenzhelligkeitsdaten (I_{ref}) für einen Benutzerbereich (5) des Bildschirmarbeitsplatzes (1) durch eine Kamera (4),
- Erfassen von aktuellen Helligkeitsdaten (Iⱼ) für den Benutzerbereich (5) des Bildschirmarbeitsplatzes (1) durch die Kamera (4),
- Vergleich der aktuellen Helligkeitsdaten (Iⱼ) und Referenzbelligkeitsdaten (I_{ref}) durch eine Steuervorrichtung (11),
- Bestimmen von Umgebungslichtbedingungen basierend auf dem Vergleich und
- Einstellen der Bildhelligkeit der Anzeigeeinheit (2) basierend auf den bestimmten Umgebungslichtbedingungen.

5. Verfahren nach Anspruch 4 mit dem zusätzlichen Schritt:
- Einstellen eines Bildkontrastes der Anzeigeeinheit (2) basierend auf den bestimmten Umgebungslichtbedingungen und der eingestellten Bildhelligkeit.

6. Verfahren nach Anspruch 5 mit dem zusätzlichen Schritt
- Erkennen des Abstands eines Benutzers von der Anzeigeeinheit (2) durch die Steuervorrichtung (11), wobei im Schritt des Einstellens der Bildhelligkeit und/oder des Bildkontrastes, die Bildhelligkeit und/oder der Bildkontrast in Abhängigkeit des erkannten Abstandes eingestellt, wird.

7. Verfahren nach einem der Ansprüche 4 bis 6 mit den zusätzlichen Schritten:
- Erkennen, basierend auf dem Vergleich der Helligkeitsdaten, ob ein Benutzer in dem Benutzerbereich (5) aktiv ist, und
- Aktivieren eines Energiesparzustandes der Anzeigeeinheit (2), wenn kein aktiver Benutzer erkannt wurde.

8. Verfahren nach Anspruch 7 mit dem zusätzlichen Schritt:
- Aktivieren eines Betriebszustandes der Anzeigeeinheit (2), wenn ein aktiver Benutzer erkannt wurde.

9. Verfahren nach Anspruch 7 oder 8,
**dadurch gekennzeichnet, dass**
im Schritt des Erkennens, eine Gegenwart des Benutzers in einem Nahbereich (6) des Benutzerbereiches (5) erkannt wird.

10. Verfahren nach einem der Ansprüche 7 bis 9,
**dadurch gekennzeichnet, dass**
im Schritt des Erkennens eine Bewegung in dem Benutzerbereich (5) erkannt wird.

11. Verfahren nach einem der Ansprüche 7 bis 10,
**dadurch gekennzeichnet, dass**
im Schritt des Erkennens wenigstens ein biometrisches Merkmal des Benutzers erkannt wird.

12. Verwendung eines Computers (24) mit einer daran angeschlossenen Anzeigeeinheit (2) und einer daran angeschlossenen Webkamera in einem Verfahren (40, 50) gemäß einem der Ansprüche 4 bis 11.

13. Verwendung eines tragbaren Computers mit einer eingebauten Anzeigeeinheit (2) und einer eingebauten Kamera (4) in einem Verfahren (40, 50) gemäß einem der Ansprüche 4 bis 11.
